# EUROPEAN PATENT APPLICATION

(11) **EP 1 698 876 A2**
(43) Date of publication of application: **06.09.2006**
(21) Application number: 06075439.7
(22) Date of filing: 27.02.2006
(51) Int. Cl.: G01L 1/14, G01G 19/414, G01G 7/06

(54) **Capacitive load cell apparatus having a non-planar nonconductive elastomeric dielectric**

(30) Priority: 02.03.2005 US 70067
(71) Applicant: Delphi Technologies, Inc., Troy, MI 48007 (US)
(72) Inventor: Koors, Mark A., Kokomo, IN 46902 (US)
(74) Representative: Denton, Michael John

(57) **Abstract**

A capacitive load cell apparatus (12) includes first and second conductor plates (30, 28) and an intermediate convoluted nonconductive elastomeric dielectric (22) that variably collapses in response to applied force. The dielectric convolutions are defined by a pattern of cone-shaped or dome-shaped projections (22a, 22b/22a', 22b') that alternately extend toward the first and second conductor plates (30, 28). When an occupant sits in the seat, the projections (22a, 22b/22a', 22b') of the dielectric material variably collapse in relation to the amount and distribution of the applied weight to locally reduce the separation between the first and second conductor plates (30, 28). Preferably, the first conductor plate comprises an array of charge plate conductors (30) to define a plurality of capacitances whose variation is detected as an indication of the amount and distribution of the applied weight.

## Description

### TECHNICAL FIELD

The present invention relates to a capacitive load cell for estimating occupant weight applied to a vehicle seat, and more particularly to a load cell having a dielectric material that provides enhanced range and a predictable load deflection response.

### BACKGROUND OF THE INVENTION

Various sensing technologies have been utilized to classify the occupant of a vehicle seat for purposes of determining whether to enable or disable air bag deployment, and/or for purposes of determining how forcefully an air bag should be deployed. The present invention is directed to an approach in which at least one capacitive load cell is installed in a vehicle seat, and the capacitance of the load cell is measured to provide an indication of the weight applied to the seat and/or the distribution of the applied weight. In general, a capacitive load cell includes at least first and second conductive plates separated by a compressible dielectric such as a sheet of rubber, plastic or polymeric foam. For example, representative capacitive load cells are disclosed in the U.S. Patent No. 4,266,263 to Haberl et al., issued on May 5, 1981. Additionally, the U.S. Patent Nos. 4,836,033 to Seitz; 5,878,620 to Gilbert et al.; 6,448,789 and 6,591,685 to Kraetzl et al.; and 6,499,359 to Washeleski et al. show capacitive load cells as applied to vehicle seats for sensing occupant weight or weight distribution.

### SUMMARY OF THE INVENTION

The present invention is directed to an improved capacitive load cell apparatus for measuring weight applied to a vehicle seat, including first and second conductor plates and an intermediate dielectric comprising a convoluted nonconductive elastomer that variably collapses in response to the applied weight. The dielectric convolutions are defined by a pattern of cone-shaped or dome-shaped projections that alternately extend toward the first and second conductor plates. When an occupant sits in the seat, the projections of the dielectric material variably collapse in relation to the amount and distribution of the applied weight to locally reduce the separation between the first and second conductor plates. In a preferred embodiment, the first conductor plate comprises an array of charge plate conductors to define a plurality of capacitances whose variation is detected as an indication of the amount and distribution of the applied weight.

### BRIEF DESCRIPTION OF THE DRAWINGS

FIG. 1 is an exploded diagram of a vehicle seat and a sensing apparatus including a capacitive load cell according to a first embodiment of this invention;
FIG. 2 is an isometric view of the convoluted elastomeric dielectric of FIG. 1;
FIG. 3 is a cross-sectional diagram of a convoluted elastomeric dielectric according to a second embodiment of this invention;
FIG. 4 is a graph depicting a variation in overall capacitive reactance of the load cell of FIG. 1 as a function of applied occupant weight.

### DESCRIPTION OF THE PREFERRED EMBODIMENT

While the capacitive load cell apparatus of the present invention may be used in various applications, it is disclosed herein in the context of an apparatus for detecting the weight and/or distribution of weight applied to a vehicle seat. In general, a capacitive load cell comprises upper and lower conductor plates separated by a compressible non-conductive dielectric, such that mechanical loading of the cell reduces the separation distance of the conductor plates, increasing the electrical capacitance between the upper and lower plates. As applied to a vehicle seat, the capacitive load cell is preferably disposed between the frame and bottom cushion of the seat as depicted herein, but it will be understood that the load cell may be installed in a different location such as in the bottom cushion, in or behind a back cushion, and so on.

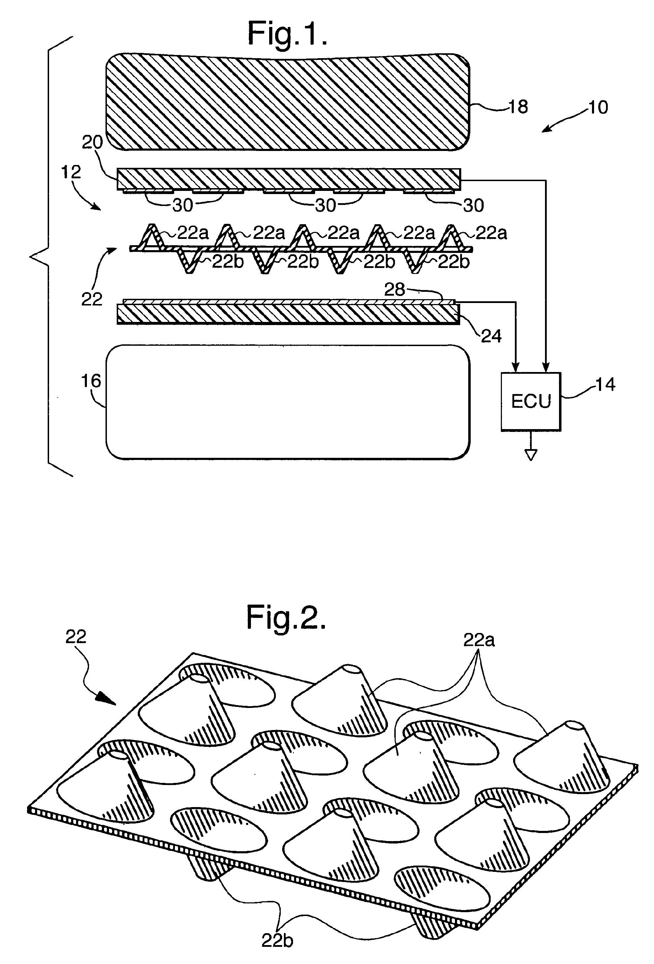

Referring to FIG. 1, the reference numeral 10 generally designates a seat bottom and sensor apparatus according to this invention. The sensor apparatus includes a capacitive load cell 12 and an electronic control unit (ECU) 14. The load cell 12 is disposed between the seat frame 16 and a foam cushion 18, and includes an upper substrate 20, a dielectric sheet 22, and a lower substrate 24. A reference plane conductor 28 is formed on lower substrate 24 adjacent the lower surface of dielectric sheet 22, and a number of charge plate conductors 30 are formed on upper substrate 20 adjacent the upper surface of dielectric 22. The upper and lower substrates 20, 24 are non-conductive, and may be formed of a material such as polyurethane with a thickness of about 0.5 mm. The conductors 28, 30 may be metal foil pads laminated to the respective substrates 20, 24. The reference plane conductor 28 and each of the charge plate conductors 30 are separately coupled to ECU 14, which periodically measures capacitance values between the reference plane conductor 28 and each of the charge plate conductors 30. The measured capacitances provide an indication of the weight applied to seat cushion 18, as well as the distribution of the weight, for purposes of detecting the presence of an occupant and classifying the occupant as a child, an adult, a child seat, or some other classification.

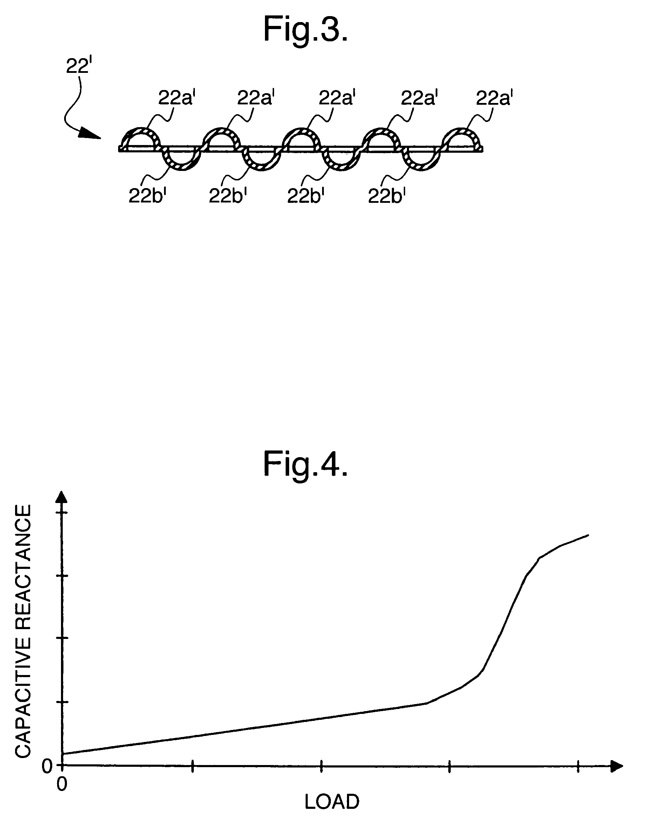

According to the present invention, the dielectric 22 is a convoluted nonconductive elastomer that variably collapses in response to weight applied to the cushion 18. In the embodiment of FIGS. 1-2, the dielectric convolutions are defined by a pattern of cone-shaped projections 22a, 22b that alternately extend toward the charge plate conductors 30 and the reference plane conductor 28. In the embodiment of FIG. 3, the dielectric 22' has convolutions defined by a pattern of dome-shaped projections 22a', 22b' that alternately extend toward the charge plate conductors 30 and the reference plane conductor 28. In both cases, the projections 22a, 22b/22a', 22b' variably collapse in relation to the amount and distribution of the applied weight to locally reduce the separation between the charge plate conductors 30 and the reference plane conductor 28. As indicated by the graph of FIG. 4, a secondary deformation of the dielectric 22/22' occurs when the projections 22a, 22b/22a', 22b' have completely collapsed, and the dielectric 22/22' locally compresses as a sheet. The dielectrics 22/22' can achieve over 70% reduction in height with increasing applied weight, providing enhanced dynamic range compared to a planar compressible dielectric. Furthermore, the dimensions and thickness of the dielectric 22/22' can be specified to tailor the load-deflection response to a particular application. In a mechanization of the present invention for use in a vehicle seat at illustrated in FIG. 1, the dielectric 22 was formed of neoprene having a base thickness of 1.0 mm, with a spacing of 10.0 mm between alternating projections and a projection height of 4.0 mm from the web centerline, for an unloaded overall thickness of about 8 mm.

In summary, a capacitive load cell in accordance with the present invention offers the advantages of light weight, localized deformation for detecting weight distribution, enhanced range of weight measurement, predictable weight vs. capacitance relationship, and low cost. While the apparatus of the present invention has been described with respect to the illustrated embodiment, it is recognized that numerous modifications and variations in addition to those mentioned herein will occur to those skilled in the art. For example, the load cell 12 may be used in non-automotive environments, the shape and number of the various conductors can be varied to suit a given application, etc. Also, the load cell conductors 28, 30 do not have to be in contact with the dielectric 22/22', but may be located on the outboard surfaces of the respective substrates 24, 20, and so on. Accordingly, it is intended that the invention not be limited to the disclosed embodiment, but that it have the full scope permitted by the language of the following claims.

## Claims

1. Capacitive load cell apparatus (12) including first and second conductor plates (30, 28) separated by a compressible dielectric (22) such that force applied to the load cell (12) compresses the dielectric (22) to increase a capacitance between the first and second conductor plates (30, 28), the improvement wherein:
the compressible dielectric (22) comprises a convoluted nonconductive elastomer having a pattern of projections (22a, 22b/22a', 22b') that alternately extend toward the first and second conductor plates (30, 28), where the projections (22a, 22b/22a', 22b') variably collapse in response to said applied force so that the increase in capacitance between the first and second conductor plates (30, 28) is indicative of said applied force.

2. The apparatus of claim 1, wherein said projections (22a, 22b/22a', 22b') are cone-shaped.

3. The apparatus of claim 1, wherein said projections (22a, 22b/22a', 22b') are dome-shaped.

4. The apparatus of claim 1, where said first conductor plate comprises an array of spaced charge plate conductors (30), and the applied force locally collapses said projections (22a, 22b/22a', 22b') so that variation in capacitance between said second conductor (28) and individual charge plate conductors (30) indicates a distribution of said applied force.
